# EUROPÄISCHE PATENTSCHRIFT

(11) **EP 1 931 532 B1**
(45) Veröffentlichungstag und Bekanntmachung des Hinweises auf die Patenterteilung: **07.03.2012**
(21) Anmeldenummer: 06763915.3
(22) Anmeldetag: 28.06.2006
(51) Int. Cl.: B60N 2/02, B60N 2/44, F16H 25/20

(54) **GETRIEBE-ANTRIEBSEINHEIT, MIT EINEM TRÄGERROHR, SOWIE HERSTELLUNGSVERFAHREN EINER SOLCHEN**
TRANSMISSION DRIVE UNIT COMPRISING A SUPPORT TUBE, AND METHOD FOR PRODUCING SAID DRIVE UNIT
UNITE DE TRANSMISSION ET D'ENTRAINEMENT PRESENTANT UN TUYAU SUPPORT ET PROCEDE DE PRODUCTION D'UNE TELLE UNITE

(30) Priorität: 28.09.2005 DE 102005046357
(43) Veröffentlichungstag der Anmeldung: 18.06.2008
(73) Patentinhaber: ROBERT BOSCH GMBH, 70442 Stuttgart (DE)
(72) Erfinder: OBERLE, Hans-Juergen, 76437 Rastatt (DE); LIENIG, Andreas, 77815 Buehl (DE)
(86) Internationale Anmeldenummer: PCT/EP2006/063617
(87) Internationale Veröffentlichungsnummer: WO 2007/036371

(56) Entgegenhaltungen:
- EP-A- 0 759 374
- EP-A- 1 223 073
- WO-A-2004/028305
- WO-A-2006/024598
- DE-C1- 4 101 470

## Beschreibung

### Stand der Technik

Die Erfindung betrifft eine Getriebe-Antriebseinheit mit einem Trägerrohr, insbesondere zum Verstellen eines beweglichen Teils im Kraftfahrzeug, sowie ein Herstellungsverfahren einer solchen, nach der Gattung der unabhängigen Ansprüche.

Mit der EP 0 759 374 A2 ist eine Vorrichtung zum Verstellen eines Sitzes im Kraftfahrzeug bekannt geworden, die gegenüber dem Normalbetrieb erheblich größere Kräfte aufnehmen kann. Solche Kräfte können beispielsweise durch einen Verkehrsunfall verursacht werden. Hierbei ist es wichtig, dass der Fahrzeugsitz fest mit der Karosserie verbunden bleibt, um die Funktion der vorgesehenen Schutzmaßnahmen für die Fahrzeuginsassen (Sicherheitsgurt, Airbag) zu gewährleisten. Bei obiger Vorrichtung ist eine Gewindemutter, die eine Gewindespindel aufnimmt, fest mit der Karosserie verbunden. Die Gewindespindel wird über ein Schneckengetriebe von einem Elektromotor angetrieben, der seinerseits fest mit dem Sitz verbunden ist. Das Getriebegehäuse des Schneckengetriebes ist aus Kunststoff gefertigt und über ein weiteres Gehäuseteil mit dem Antriebsmotor verbunden. Wird der Antriebsmotor betätigt, dreht sich die Gewindespindel und verschiebt das Getriebegehäuse einschließlich Antriebsmotor und Sitz gegenüber der Gewindemutter. Um beispielsweise bei einem Auffahrunfall das Losreißen des Getriebegehäuses von der Gewindespindel zu verhindern, ist ein zusätzliches metallisches, u-förmiges Stützteil vorgesehen, das das Getriebegehäuse über einen gelenkigen Befestigungsbolzen mit dem Antriebsmotor und somit mit dem Sitz verbindet. Kann das Getriebegehäuse aus Kunststoff dem hohen Kraftfluss nicht standhalten, wird es mittels einer zusätzlichen Gewindemutter durch das metallische Stützteil gehalten. Nachteil dieser Ausführung ist, dass zusätzlich zum kompletten Getriebegehäuse eine aufwendige Stützkonstruktion notwendig ist, die die Anzahl der Bauteile erhöht und zusätzlichen Bauraum beansprucht.

Mit der EP 1 223 073 A2 ist ein Spindelantrieb bekannt geworden, bei dem zur Aufnahme von Crash-Kräften zusätzliche Stützelemente in das Getriebegehäuse eingelegt werden. In einem weiteren Ausführungsbeispiel ist eine Stützscheibe innerhalb eines gespritzten Schneckenrads angeordnet, um gegebenenfalls ein Herausreißen der Spindel aus dem Getriebegehäuse zu verhindern. Der Nachteil dieser Ausführung besteht darin, dass für unterschiedliche Crash-Anforderungen jeweils das gesamte Getriebegehäuse und/ oder das Schneckenrad umkonstruiert werden müssen. Für sehr hohe Belastungen wird beispielsweise eine zusätzliche Stützmanschette um das Getriebegehäuse angeordnet. Diese konstruktiven Änderungen sind gleichzeitig mit hohen Werkzeugkosten verbunden, wodurch eine Anpassung des Spindelantriebs an unterschiedliche Crash-Anforderungen mit hohen Kosten verbunden ist.

Mit der DE 4101470 C1 ist eine Verstelleinheit für Fahrzeugsitze bekannt geworden, die eine Gewindespindel und eine auf dieser angeordnete sowie drehbar in einem Gehäuse gelagerten Spindelmutter aufweist. An die Spindelmutter schließt sich axial eine hülsenförmige Nabe an, die über ein Schneckengetriebe von einem Elektromotor angetrieben wird.

Die WO 2004/028305 A1 zeigt einen elektromotorischen Möbelantrieb, bei dem eine Spindel mit einer darauf angeordneten Spindelmutter in einem Profilschienenabschnitt als Gehäuse angeordnet ist. An einem Ende des Profilsschienenabschnitts sind zwei fluchtende Bohrungen angeordnet, die zur Aufnahme einer Befestigungsvorrichtung geeignet sind.

### Vorteile der Erfindung

Die erfindungsgemäße Getriebe-Antriebseinheit und deren erfindungsgemäßes Herstellungsverfahren mit den Merkmalen der unabhängigen Ansprüche haben den Vorteil, dass durch die Anordnung des Antriebsrads der Spindel in einem Trägerrohr eine separate standardisierte Baugruppe geschaffen wird, die unabhängig ist vom Antriebsaggregat. Durch den Verzicht auf ein herkömmliches Getriebegehäuse, bei dem das Abtriebselement des Antriebsaggregats und das Antriebsrad der Spindel gemeinsam in einem geschlossenen Gehäuse angeordnet sind, kann die Getriebe-Antriebseinheit als modulares Baukastensystem sehr flexibel an unterschiedliche Festigkeitsanforderungen angepasst werden. Dabei kann immer das gleiche Antriebsaggregat verwendet werden, da auch die mechanische Schnittstelle zur Übertragung des Antriebsmoments für unterschiedliche Crash-Anforderungen gleich bleibt. Da die gesamten Crash-Kräfte von dem Trägerrohr aufgenommen und an die Befestigungsvorrichtung abgeleitet werden, wird nur das Trägerrohr den unterschiedlichen Festigkeitsansprüchen angepasst. Durch die Verwendung eines standardisierten Trägerrohrs, an dem gegebenenfalls unterschiedliche Stützelemente angeformt werden, wird sehr kostengünstig eine sehr hohe Flexibilität des Spindelantriebs erzielt. Dabei können die zylinderförmigen Stützelemente vorteilhaft völlig unabhängig von der Montage der Spindel und deren Antriebsrad im Trägerrohr nachträglich an diesem angefügt werden. Versuche haben gezeigt, dass im Crash-Fall am Trägerrohr die höchsten Belastungen zwischen der Aufnahme für die Befestigungsvorrichtung und dem entsprechenden axialen Ende des Trägerrohrs auftreten. Daher kann die Crash-Festigkeit besonders effektiv erhöht werden, indem das Trägerrohr zumindest im Bereich zwischen der Aufnahme und dem dieser am nächsten liegenden axialen Ende des Trägerrohrs mittels des Stützelements verstärkt wird. Dabei wird die Krafteinleitung vorteilhaft gleichmäßig über den gesamten Umfang des Trägerrohrs verteilt, weil das Stützelement auf oder in dem Trägerrohr axial soweit eingefügt wird, bis dieses axial zumindest bei einer äußeren Krafteinwirkung am Befestigungsbolzen anliegt, werden die Kräfte direkt vom Befestigungsbolzen auf das Stützelement übertragen, wodurch die Spindel mit ihrem Antriebsrad im Trägerrohr gehalten werden kann.

Durch die in den Unteransprüchen aufgeführten Maßnahmen ergeben sich vorteilhafte Weiterbildungen und Verbesserungen der in den unabhängigen Ansprüchen angegebenen Merkmale. Weist das Stützelement beispielsweise eine kreisförmige Aussparung auf, kann das Stützelement sehr einfach auf der äußeren Umfangsfläche eines runden Trägerrohrs befestigt werden, um diese zu stabilisieren. Bei dieser Ausführung des Stützelements als Außenring kann dieser auch schon vor der Montage der Spindel auf das Trägerrohr montiert werden. Diese Ausführung eignet sich auch besonders für eine durchtauchende Spindel, bei der die Spindel an beiden axialen Enden aus dem Trägerrohr heraus ragt.

In einer alternativen Ausführung ist das Stützelement innerhalb des Trägerrohrs an der inneren Wandfläche befestigt, um diese zu verstärken. Dabei kann das Stützelement als Innenring oder als komplette Scheibe ausgebildet sein, wobei eine Stützscheibe das Trägerrohr noch stärker stabilisiert. Diese verschiedenartigen Stützelemente können entsprechend der geforderten Festigkeitsansprüchen sehr einfach mit dem Standard-Trägerrohr verbunden werden. Ein weiterer Vorteil des innen liegenden Stützelements ist, dass kein zusätzlicher Auftrag entsteht, d.h. das Stützelement liegt innerhalb des sowieso benötigten Bauraums und verursacht keine zusätzlichen störenden Kanten.

Besonders einfach kann das Stützelement mit einem Gewinde in oder auf das Trägerrohr geschraubt werden. Dazu weist das Trägerrohr an seiner äußeren Umfangsfläche und/ oder seiner Innenwand zumindest im Bereich zwischen der Aufnahme und dem dieser näher liegenden axialen Ende ein entsprechendes Gewinde auf, das in ein korrespondierendes Gewindes des Stützelements eingreift. Alternativ weist das Stützelement ein selbst furchendes oder selbst schneidendes Gewinde auf, das bei der Montage in das Trägerrohr in diesem ein entsprechendes Gegengewinde ausformt.

In einer alternativen Ausführung kann das Stützelement auch an das Trägerrohr geklebt, angeschweißt, oder mittels Kaltumformung mit dem Trägerrohr verstemmt werden. Bei diesen Verbindungsmethoden können das Trägerrohr und die Stützelemente auch von einem kreisrunden Querschnitt abweichen.

Aufgrund des modularen Aufbaus des Trägerrohrs kann das Standard-Trägerrohr aus einem gut formbaren Tiefziehmetall gefertigt werden, und die Stützringe zur Erzeugung einer hohen Crash-Festigkeit aus einem entsprechend festerem Material, beispielsweise gehärtetem Stahl, hergestellt werden.

Eine weit verbreitete Kundenschnittstelle zur Anbindung des Spindelantriebs an das Kraftfahrzeug stellt ein Befestigungsbolzen dar, der drehbar in eine lochförmige Aufnahme des Trägerrohrs gelagert werden kann. Dabei werden die beispielsweise an einem Sitz angreifenden Crash-Kräfte über den Befestigungsbolzen in der Aufnahme auf das Trägerrohr übertragen. Durch die Ausbildung der Befestigungsvorrichtung als Gelenkbolzen ist die Spindel gelenkig zwischen dem zu verstellenden Teil und der Karosserie gelagert, was einen höheren Freiheitsgrad der Verstellbewegung ermöglicht.

Die Spindel kann sehr günstig im Trägerrohr gelagert werden, indem das auf der Spindel gelagerte Antriebsrad axiale Fortsätze aufweist, die wiederum in einer topfförmigen Lageraufnahme des Trägerrohrs, und/oder eines in diesem befestigten Lagerschilds aufgenommen werden. Die topförmigen Lageraufnahmen können die Spindel gleichzeitig radial und axial lagern. Wird das mindestens eine Lagerschild aus Kunststoff gefertigt, kann dieses mit minimaler Reibung, beispielsweise mit einem kugelförmigen metallischen Axialanschlag der Spindel zusammenwirken.

In einer bevorzugten Ausführung stellt die im Trägerrohr gelagerte Spindel mit der Aufnahme für die Befestigungsvorrichtung eine erste vormonierte Baugruppe dar, die mittels einer Kopplungsvorrichtung sehr einfach mit einem standardisierten Antriebsaggregat, beispielsweise einem Elektromotor mit einer Ankerschnecke, gekoppelt werden kann. Dabei greift das Abtriebselement des Antriebsaggregats zur Kraftübertragung auf das Antriebselement der Spindel durch eine entsprechende Öffnung im Trägerrohr. Da die Aussparung im Trägerrohr relativ klein ist, kann das Trägerrohr recht hohe Kräfte aufnehmen, ohne dass die Spindel aus dem Trägerrohr heraus gerissen wird. Bei dieser erfindungsgemäßen Getriebe-Antriebseinheit gibt es somit kein klassisches Getriebegehäuse, das das Abtriebsrad des Antriebs und das Antriebsrad des Getriebes gemeinsam umfasst, sondern ein weitgehend geschlossenes Trägerrohr, gegenüber dem das Abtriebselement mittels der Kopplungsvorrichtung fixiert wird. Zur Befestigung der Kopplungsvorrichtung sind am Trägerrohr beispielsweise weitere Ausformungen ausgespart, in die zur Fixierung ein entsprechendes Befestigungsmittel der Kopplungsvorrichtung eingreift. Dabei liegt das Antriebsaggregat mit seinem Abtriebselement komplett außerhalb des Kraftflusses, der bei einem Crash-Fall auftritt.

Wird das Stützelement in axialer Richtung gegenüber der Befestigungsvorrichtung verspannt, kann sich das Stützelement zu dessen Fixierung am Trägerrohr direkt in diesem festkrallen. Dadurch entfällt ein zusätzlicher Befestigungsprozess des Stützelements, wie beispielsweise mittels Kleben, Schweißen oder Materialumformung. Indem das Stützelement unter Vorspannung am Befestigungselement anliegt, kann die Kraft vom Befestigungselement ohne axiales Spiel auf das Stützelement und somit auf das Trägerrohr übertragen werden.

Von Vorteil ist es hierbei, das Stützelement als kreisrunde Spannscheibe herzustellen, die über ihren gesamten Umfang eine Kante aufweist, die sich in die Wand des Trägerrohrs festklemmt. Ist die Kante scharfkantig ausgebildet, kann sich die Kannte verschiebefest in die Rohrwand eingraben. Bei dieser Ausführung entfällt das Anformen eines Gewindes am Stützelement und/oder am Trägerrohr.

Um eine axiale Vorspannung gegenüber der Befestigungsvorrichtung zu erzielen, ist die tellerförmige Spannscheibe in ihrem äußeren radialen Bereich axial von der Befestigungsvorrichtung weg geformt. Dadurch kann die äußere Kante bei der Montage der Spannscheibe einfacher in das Material des Trägerrohrs eingreifen, wobei der mittlere Bereich der Spannscheibe gegen die Befestigungsvorrichtung gepresst wird. Ein solches Stützelement kann sehr kostengünstig als Biegestanzteil hergestellt werden.

Für höhere Festigkeitsanforderungen können je nach Bedarf mehrere Spannscheiben axial nebeneinanderliegend im Trägerrohr fixiert werden, so dass alle montierten Spannscheiben über ihren Umfang an der Kraftübertragung auf das Trägerrohr beteiligt sind. Durch die tellerförmige Ausformung der Spannscheiben können diese formschlüssig aufeinander gestapelt werden, so dass diese flächig aneinander anliegen und sich gegenseitig gegenüber einer Verformung stabilisieren.

Des Weiteren kann zwischen dem mindestens einem Stützelement und der Befestigungsvorrichtung eine Kraftübertragungsscheibe eingefügt werden, die beispielsweise eine höhere Formbeständigkeit aufweist als die Stützelemente. Dadurch kann die Kraft der beispielsweise bolzenförmigen Befestigungsvorrichtung auf eine größere Kreisfläche übertragen und an die Stützelemente weitergeleitet werden. Dadurch wird die axial einwirkende Kraft auf eine große Fläche und damit gleichmäßig auf den gesamten Umfang der Stützelemente übertragen.

Das erfindungsgemäße Herstellungsverfahren nach dem unabhängigen Anspruch 16 hat den Vorteil, dass die Montage der Baugruppe mit dem Trägerrohr unabhängig von der Montage des Antriebsaggregats erfolgt. Dadurch kann auf einfache Weise nach der Montage der Befestigungsmittel am Trägerrohr dieses mittels der Stützelemente bezüglich der geforderten Festigkeitsanforderung angepasst werden. Ein solches Baukastensystem, bei dem auch unterschiedliche Antriebsaggregate verwendet werden können, ist sehr kostengünstig und kundenfreundlich.

Die Stützelemente können in ihrer Form und ihrem Werkstoff sehr leicht variiert werden, ohne dass dadurch die Konstruktion und der Montageprozess der Getriebe-Antriebseinheit geändert werden müssen.

Durch das erfindungsgemäße Montageverfahren der als Spannscheiben ausgebildeten Stützelemente wird in einem Prozessschritt mit dem Einfügen der Spannscheiben gleichzeitig eine zuverlässige Fixierung der Spannscheiben im Trägerrohr erzielt. Dabei werden die Spannscheiben mit einer vorgebbaren Anpresskraft axial gegen die Befestigungsvorrichtung gepresst, wodurch sich die Spannscheiben unter axialer Vorspannung in der Wandfläche des Trägerrohrs festkrallen. Je nach Festigkeitsanforderung können dabei eine oder mehrere Spannscheiben in einem Arbeitsschritt montiert werden.

### Zeichnungen

In den Zeichnungen sind verschiedene Ausführungsbeispiele einer erfindungsgemäßen Getriebe-Antriebseinheit dargestellt und in der nachfolgenden Beschreibung näher erläutert. Es zeigen:
Figur 1 ein Schnitt durch eine erfindungsgemäße Getriebe-Antriebseinheit,
Figur 2 eine Seitenansicht einer separat montierbaren Baugruppe mit dem Trägerrohr,
Figur 3 eine Schnittdarstellung der Baugruppe aus Figur 2, und
Figur 4 eine weitere Ausführung gemäß Figur 2 im Schnitt.

### Beschreibung

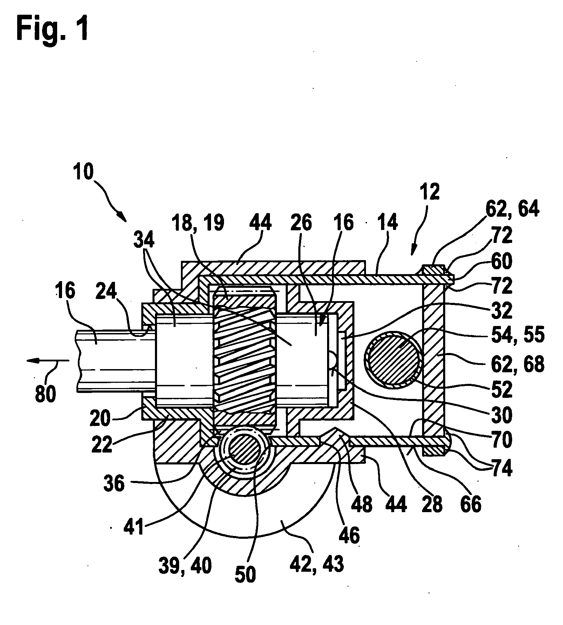

Die in Figur 1 dargestellte Getriebe-Antriebseinheit 10 besteht aus einer ersten Baueinheit 12, bei der in einem Trägerrohr 14 eine Spindel 16 mit einem darauf angeordneten Antriebsrad 18 gelagert ist. Das Trägerrohr 14 ist beispielsweise mittels Tiefziehen hergestellt und weist an einem Endbereich 20 eine topfförmige Lageraufnahme 22 für das Antriebsrad 18 auf. Die Spindel 16 ragt durch eine Öffnung 24 in der topfförmigen Lageraufnahme 22 aus dem Trägerrohr 14 heraus und ist beispielsweise über eine nicht dargestellte Gewindemutter mit der Karosserie verbunden. Bei diesem Ausführungsbeispiel befindet sich das andere Spindelende 26 innerhalb des Trägerrohrs 14 und wird axial und radial mittels eines Lagerschilds 28 gelagert, das innerhalb des Trägerrohrs 14 befestigt ist. Das Spindelende 26 weist beispielsweise eine kugelförmige Anlauffläche 30 auf, die axial in topfförmigen Lagerschild 28 anliegt. Optional kann im Lagerschild 28 eine Anlaufscheibe 32 mit erhöhter Festigkeit angeordnet werden. Das Antriebsrad 18 ist im Ausführungsbeispiel als Schneckenrad 19 ausgebildet, das zur radialen Lagerung axiale Fortsätze 34 aufweist. Das Antriebsrad 18 ist beispielsweise aus Kunststoff direkt auf die Spindel 16 aufgespritzt und weist eine Verzahnung 36 auf, die mit einem Abtriebselement 40 eines Antriebsaggregats 42 kämmt. Das Antriebsaggregat 42 ist als Elektromotor 43 ausgebildet und ist mittels einer Kopplungsvorrichtung 44 mit der ersten Baugruppe 12 verbunden. Das Trägerrohr 14 weist zur Positionierung gegenüber der Kopplungsvorrichtung 44 eine Ausformung 46 auf, in die ein entsprechendes Fixierelement 48 der Kopplungsvorrichtung 44 eingreift. Zur Übertragung des Drehmoments vom Antriebsaggregat 42 auf die separate Baugruppe 12 weist das Trägerrohr 14 eine radiale Aussparung 50 auf, in die das Abtriebselement 40 eingreift. Das Abtriebselement 40 ist beispielsweise als Schnecke 39 ausgebildet, die auf einer Ankerwelle 41 des Elektromotors 43 angeordnet ist. Das Trägerrohr 14, das praktisch ein Gehäuse für die separate Baugruppe 12 bildet, weist des Weiteren eine Aufnahme 52 auf, in die eine Befestigungsvorrichtung 54 - beispielsweise ein Gelenkbolzen 55 - einschiebbar ist. Mit dieser Befestigungsvorrichtung 54 ist das Trägerrohr 14 gelenkig mit einem zu verstellenden Teil 58 im Kraftfahrzeug verbunden, beispielsweise ein nicht näher dargestellter Sitz oder ein Sitzteil, das gegenüber einem anderen Sitzteil verstellt wird.

Zwischen der Aufnahme 52 und einem dieser an nächsten liegenden Ende 60 des Trägerrohrs 14 sind Stützelemente 62 am Trägerrohr 14 befestigt. Ein erstes Stützelement 62 ist als Außenring 64 ausgebildet, der in einer äußeren Umfangsfläche 66 des Trägerrohrs 14 anliegt. Im Inneren des Trägerrohrs 14 ist ein weiteres Stützelement 62 als Kreisscheibe 68 ausgebildet, die an der Innenwand 70 des Trägerrohrs 14 anliegt. In der oberen Bild hälfte sind die Stützelemente 62 beispielsweise mittels Schweißnähten 72 mit dem Trägerrohr 14 verbunden. Die untere Bildhälfte zeigt eine Befestigung des Stützelements 62 mittels einer Verstemmung 74 durch plastische Materialumformung.

Wirkt nun bei einem Auffahrunfall in axialer Richtung 76 eine Zugkraft 80 auf die Spindel 16 ein, wird die Spindel 16 über das Antriebsrad 18 in der topfförmigen Lageraufnahme 22 des Trägerrohrs 14 abgestützt. Die Zugkraft 80 wird über das Trägerrohr 14 auf die Befestigungsvorrichtung 54 übertragen, wodurch zwischen der Aufnahme 52 und dem Ende 60 des Trägerrohrs 14 eine hohe Materialbelastung auftritt. Diese erhöhten Kräfte werden durch ein oder mehrere Stützelemente 62 aufgenommen, die damit die zerstörungsfreie Kraftaufnahme des Trägerrohrs 14 erhöhen. Dadurch bleibt das Spindelende 26 und damit das zu verstellende Teil 58 auch im Crash-Fall an seinem bestimmungsgemäßen Ort.

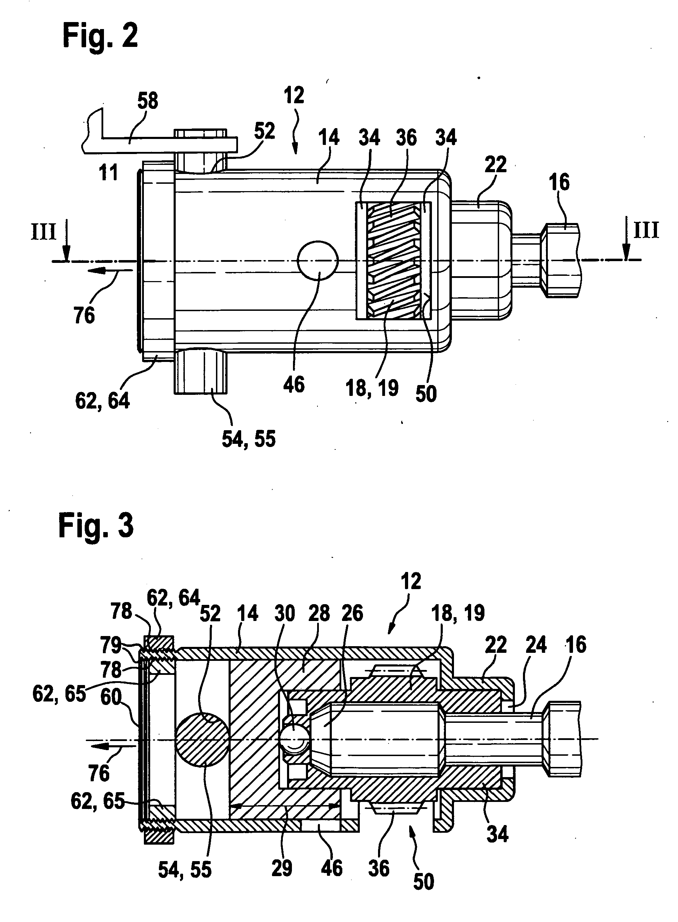

Figur 2 und Figur 3 zeigen ein weiteres Ausführungsbeispiel eines Spindelantriebs 10, bei dem die Stützelemente 62 ein Gewinde 78 aufweisen, das mit einem korrespondierenden Gegengewinde 79 des Trägerrohrs 14 zusammen wirken. Dabei sind die Stützelemente 62 in axialer Richtung 76 soweit auf oder in das Trägerrohr 14 eingefügt, bis sich die Befestigungsvorrichtung 54 in axialer Richtung des Trägerrohrs 14 an den Stützelementen 62 abstützt. In der Schnittdarstellung der Figur 3 (entlang III-III der Figur 2) ist zu erkennen, dass am Trägerrohr 14 sowohl ein Außengewinde 79 als auch ein Innengewinde 79 angeformt ist, auf das die Stützelemente 62 einfach auf- oder eingeschraubt werden. Das Stützelement 62, das an der Innenwand 70 anliegt ist als Innenring 65 ausgebildet, der beispielsweise auch von einer Tauchspindel 16 durchdrungen wird. Bei der Befestigung des Stützelements 62 mittels eines Gewindes 78 wird die Kraft 80 über die Gewinde 78, 79 über den gesamten Umfang des Trägerrohrs 14 auf dieses eingeleitet, wodurch eine partielle Spannungsüberhöhung im Bereich der Aufnahme 52 vermieden wird, und die bisher unbelasteten Bereiche des Trägerrohrs 14 mitgenutzt werden.

In einer weiteren Variante weisen die Stützelemente 62 selbstschneidende Gewinde 78 auf, die beim Eindrehen in das Trägerrohr 14 in diesem Gegengewinde 79 formen. Die Befestigungsvorrichtung 54 liegt in diesem Beispiel axial am Lagerschild 28 an, sodass auch auf die Spindel 16 einwirkende Druckkräfte über den Befestigungsbolzen 54 aufgenommen werden. Das Lagerschild 28 weist bei dieser Ausführung über seine gesamte axiale Länge 29 einen konstanten Außendurchmesser auf, wodurch dessen mechanische Stabilität erhöht wird. Für die Drehmomentübertragung ist im Trägerrohr 14 die Aussparung 50 rechteckig ausgebildet, sodass die Schnecke 39 mit dem Antriebsrad 18 kämmen kann. In Figur 2 und 3 ist lediglich die separate Baugruppe 12 dargestellt, die völlig unabhängig vom Antriebsaggregat 42 montiert werden kann. An die vormontierte Baugruppe 12 wird dann anschließend über die Ausformung 46 die Kopplungsvorrichtung 44 moniert, die das Antriebsaggregat 42 gegenüber dem Trägerrohr 14 zur Momentübertragung fixiert. Die Montage der Stützelemente 62 kann beispielsweise am Ende der Montage der separaten Baugruppe 12 vorgenommen werde, oder erst nach dem kompletten Zusammenbau der Getriebe-Antriebseinheit 10. Wird das Stützteil 62 als Außenring 64 ausgebildet, kann dies schon vorab auf das Trägerrohr 14 montiert werden, bevor die Spindel 16 in das Trägerrohr 14 eingeführt wird.

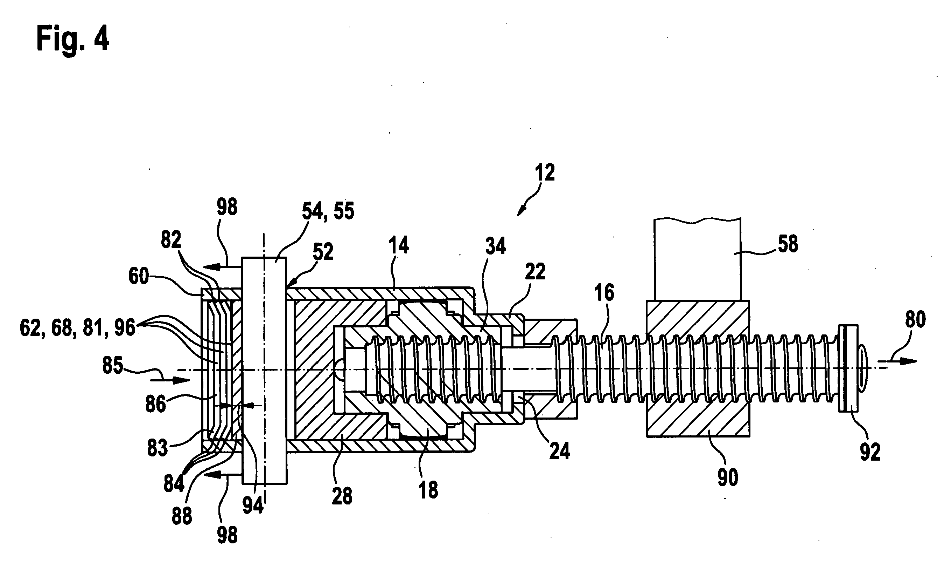

In Figur 4 ist ein weiteres Ausführungsbeispiel dargestellt, bei dem die Stützelemente 62 als Spannscheiben 81 ausgebildet sind. Die Stützelemente 62 sind hierbei als Kreisscheibe 68 geformt, die an einem radial äußeren Randbereich 83 in axialer Richtung des Trägerrohrs 14 von der Befestigungsvorrichtung 54 wegweisen. Dadurch sind die Stützelemente 62 tellerförmig ausgebildet, mit einem planaren mittleren Bereich 86 und dem abgewinkelten äußeren Randbereich 83. An seinem äußeren Umfang 82 weist das Stützelement 62 eine Kante 84 auf, die in montiertem Zustand in der Innenwand 70 des Trägerrohrs 14 eingegraben ist. Die Kannte 84 kann hierbei beispielsweise einen Winkel von 90° aufweisen, oder scharfkantig, beispielsweise mit einem Grat ausgebildet sein. In Figur 4 sind beispielsweise drei Spannscheiben 81 axial aneinander liegend im Trägerrohr 14 montiert, wobei sich jede Spannscheibe 81 jeweils mit ihrer Kante 84 im Trägerrohr 14 festkrallt. Zwischen den Stützelementen 62 und der Befestigungsvorrichtung 54 ist eine Kraftübertragungsscheibe 88 angeordnet, die stabiler ausgeführt ist als die Stützelemente 62. Die Kraftübertragungsscheibe 88 weist beispielsweise eine größere Dicke 94 auf, oder ist aus einem festeren Material gefertigt. Dadurch wird die vom Gelenkbolzen 55 linienförmig auf die Kraftübertragungsscheibe 88 übertragene Kraft großflächig auf die kreisförmigen Stützelemente 62 weitergeleitet. Dadurch ist gewährleistet, dass die einwirkende axiale Kraft 80 gleichmäßig auf den gesamten Umfang 82 der Stützelemente 62 weitergeleitet wird. Die Kraftübertragungsscheibe 88 ist hierbei beispielsweise nicht radial am Trägerrohr 14 befestigt, sondern lose in das Trägerrohr 14 eingefügt. Bei der axialen Montage der Spannscheiben 81 werden diese gegen die Kraftübertragungsscheibe 88 und diese wiederum gegen die Befestigungsvorrichtung 54 gepresst. Damit stützt sich der mittlere planare Bereich 86 der Spannscheiben 81 an der Befestigungsvorrichtung 54 ab, wobei die Vorspannung mittels der Einpresskraft der Spannscheiben 81 vorgegeben wird.

Auf der Spindel 16 ist eine Spindelmutter 90 angeordnet, die mit einem zu verstellenden Teil 58, beispielsweise einem Kraftfahrzeugsitz, verbunden ist. Bei einem Crash-Fall wirkt nun über das zu verstellende Teil 58 eine Zugkraft 80 auf die Spindel 16, wodurch hohe Kräfte zwischen dem Trägerrohr 14 und der Befestigungsvorrichtung 54 auftreten. Um ein Ausreißen, beispielsweise des Befesdgungsbolzens 54, zu verhindern, wird die vom Befestigungsbolzen 55 einwirkende Kraft 98 gleichmäßig über den Umfang 82 der Stützelemente 62 auf das Ende 60 des Trägerrohrs 14 übertragen.

Es sei angemerkt, dass hinsichtlich der in den Figuren gezeigten Ausführungsbeispiele und der Beschreibung vielfältige Kombinationsmöglichkeiten der einzelnen Merkmale untereinander möglich sind. So kann beispielsweise das Trägerrohr 14 in unterschiedlichen Verfahren hergestellt werden und unterschiedliche konkrete Ausformungen aufweisen. Anstatt eine angeformten topfförmigen Lageraufnahme 22 kann das Trägerrohr 14 auch als glattes Zylinderrohr ausgebildet sein, in das zwei separate Lagerschilde 28 für die Lagerung der Spindel 16 angeordnet werden. Die Spindel 16 wird vorzugsweise über das darauf gelagerte Antriebsrad 18 gelagert, kann in einer Variation aber auch mittels Lagerflächen gelagert werden, die direkt an der Spindel 16 angeformt sind. Ebenso ist die Erfindung nicht auf die Verwendung eines Gelenkbolzens 55 als Befestigungsvorrichtung 54 beschränkt, sondern das Trägerrohr 14 kann auch eine anders geartete Aufnahme 52 zur Befestigung am Karosserie/ Verstell-Teil 58 aufweisen. Beispielsweise kann auch eine durchtauchende Spindel 16 im Trägerrohr 14 gelagert werden, wobei dann beide topfförmige Lageraufnahmen 22 eine Öffnung 24 aufweisen, durch die die Spindel 16 ragt. Die Momentübertragung ist nicht auf ein Schneckengetriebe 19, 39 beschränkt, sondern kann beispielsweise auch mittels eines Stirnradgetriebes übertragen werden. Die Form- und Materialauswahl der Stützelemente 62 wird entsprechend der Festigkeitsanforderung gewählt, wobei nach Bedarf ein oder mehrere Stützelemente 62 befestigt werden können. Der Querschnitt des Trägerrohrs 14 ist nicht auf einen Kreis beschränkt, jedoch kann bei einer zylindrischen Ausbildung des Trägerrohrs 14 das Stützelement 62 einfach als nachträgliche Bodenfläche oder Wandverstärkung ausgebildet werden.

## Patentansprüche

1. Getriebe-Antriebseinheit (10), insbesondere zum Verstellen eines beweglichen Teils (58) im Kraftfahrzeug, mit einem Antriebsaggregat (42), das über ein Abtriebselement (40) ein auf einer Spindel (16) der Getriebe-Antriebseinheit (10) gelagertes Antriebsrad (18) antreibt, und das Antriebsrad (18) drehbar in einem Trägerrohr (14) der Getriebe-Antriebseinheit (10) gelagert ist, das eine Aufnahme (52) für eine Befestigungsvorrichtung (54) zum Ableiten von Crash-Kräften aufweist, wobei zwischen einem axialen Ende (60) des Trägerrohrs (14) und der Aufnahme (52) mindestens ein nachträglich, separat montierbares kreis- oder ringförmiges Stützelement (62) zur mechanischen Verstärkung des Trägerrohrs (14) befestigt ist, wobei das Stützelement (62) auf oder in dem Trägerrohr (14) axial soweit eingefügt ist, bis dieses axial zumindest bei einer äußeren Krafteinwirkung an der als Befestigungsbolzen (55) ausgebildeten Befestigungsvorrichtung (54) anliegt.

2. Getriebe-Antriebseinheit (10) nach Anspruch 1, **dadurch gekennzeichnet, dass** das Stützelement (62) als Außenring (64) ausgebildet ist, der an einer äußeren Umfangsfläche (66) des Trägerrohrs (14) anliegt.

3. Getriebe-Antriebseinheit (10) nach einem der Ansprüche 1 oder 2, **dadurch gekennzeichnet, dass** das Stützelement (62) als Innenring (65) oder als eine Kreisscheibe (68) ausgebildet ist, die an einer inneren Wandfläche (70) des Trägerrohrs (14) anliegen.

4. Getriebe-Antriebseinheit (10) nach einem der vorhergehenden Ansprüche, **dadurch gekennzeichnet, dass** das Stützelement (62) mittels eines - insbesondere eines selbstfurchenden - Gewindes (78) mit dem Trägerrohr (14) verbindbar ist.

5. Getriebe-Antriebseinheit (10) nach einem der vorhergehenden Ansprüche, **dadurch gekennzeichnet, dass** das Stützelement (62) mittels Schweißen, Kleben oder plastischer Materialumformung mit dem Trägerrohr (14) verbindbar ist.

6. Getriebe-Antriebseinheit (10) nach einem der vorhergehenden Ansprüche, **dadurch gekennzeichnet, dass** das Material des Stützelements (62) - vorzugsweise gehärteter Stahl - eine höhere Festigkeit aufweist, als des Material des Trägerrohrs (14), das insbesondere als metallisches Tiefziehteil gefertigt ist.

7. Getriebe-Antriebseinheit (10) nach einem der vorhergehenden Ansprüche, **dadurch gekennzeichnet, dass** die Aufnahme (52) als radiale Durchgangsbohrung im Trägerrohr (14) ausgebildet ist, in die als Befestigungselement (54) der Befestigungsbolzen (55) einschiebbar ist, der wiederum an der Karosserie oder dem zu verstellenden Teil (58) fixierbar ist.

8. Getriebe-Antriebseinheit (10) nach einem der vorhergehenden Ansprüche, **dadurch gekennzeichnet, dass** das Befestigungselement (54, 55) nach dessen Montage in axialer Richtung des Trägerrohrs (14) am Stützelement (62) anliegt.

9. Getriebe-Antriebseinheit (10) nach einem der vorhergehenden Ansprüche, **dadurch gekennzeichnet, dass** das Antriebsrad (18) mittels mindestens eines Lagerschilds (28) mit einer topfförmigen Lageraufnahme (22) radial und axial im Trägerrohr (14) gelagert ist, wobei das Lagerschild (28) vorzugsweise aus Kunststoff gefertigt ist.

10. Getriebe-Antriebseinheit (10) nach einem der vorhergehenden Ansprüche, **dadurch gekennzeichnet, dass** das Antriebsaggregat (42) mittels einer Kopplungsvorrichtung (44) mit dem Trägerrohr (14) verbunden ist, das für den Eingriff des Abtriebselements (40) in das Antriebsrad (18) eine radiale Aussparung (50) aufweist.

11. Getriebe-Antriebseinheit (10) nach einem der vorhergehenden Ansprüche, **dadurch gekennzeichnet, dass** das Stützelement (62) gegen die Befestigungsvorrichtung (54) verspannt am Trägerrohr (14) festgeklemmt ist.

12. Getriebe-Antriebseinheit (10) nach einem der vorhergehenden Ansprüche, **dadurch gekennzeichnet, dass** das Stützelement (62) als Spannscheibe (81) ausgebildet ist, die sich über deren gesamten Umfang (82) mit einer Kante (84) in die innere Wandfläche (70) des Trägerrohrs (14) eingräbt.

13. Getriebe-Antriebseinheit (10) nach einem der vorhergehenden Ansprüche, **dadurch gekennzeichnet, dass** die Spannscheibe (81) einen äußeren Randbereich (83) aufweist, der in axialer Richtung des Trägerrohrs (14) von der Befestigungsvorrichtung (54) weg weist - wobei die Spannscheibe (81) insbesondere als Biegestanzteil (96) gefertigt ist.

14. Getriebe-Antriebseinheit (10) nach einem der vorhergehenden Ansprüche, **dadurch gekennzeichnet, dass** mehrere identische Stützelemente (62, 81) axial aneinander anliegend am Trägerrohr (14) befestigt sind.

15. Getriebe-Antriebseinheit (10) nach einem der vorhergehenden Ansprüche, **dadurch gekennzeichnet, dass** zwischen dem mindestens eine Stützelement (62) und der Befestigungsvorrichtung (54) eine Kraftübertragungsscheibe (88) angeordnet ist, die von der Befestigungsvorrichtung (54) einwirkende Kräfte (98) an das mindestens eine Stützelement (62) überträgt.

16. Verfahren zur Herstellung einer Getriebe-Antriebseinheit (10) nach einem der vorhergehenden Ansprüche, **dadurch gekennzeichnet, dass** zuerst die Spindel (16) mit dem Antriebsrad (18) und dem Stützelement (62) am Trägerrohr (14) als eine separate Baueinheit (12) montiert werden, und anschließend das Antriebsaggregat (42) mittels der Kopplungsvorrichtung (44) am Trägerrohr (14) befestigt wird.

17. Verfahren nach Anspruch 16, **dadurch gekennzeichnet dass** für verschiedene Festigkeitsanforderungen einer Getriebe-Antriebseinheit (10) immer ein einheitliches Standard-Trägerrohr (14) verwendet wird, an das entsprechend dessen Beanspruchung unterschiedlich stabile Stützelemente (62) befestigt werden.

18. Verfahren nach Anspruch 16, **dadurch gekennzeichnet dass** nach der Montage der Befestigunsmittel am Trägerrohr (14) das Stützelement (62) oder eine unterschiedliche Anzahl identischer Stützelemente (62) eines Baukastensystems in das Trägerrohr (14) eingeschoben und unter Vorspannung gegen das Befestigungselement (54) gepresst wird, wobei das Stützelement (62) selbständig mittels Festkrallen im Trägerrohr (14) gegen ein Verschieben entgegen der Einschubrichtung (85) gesichert wird.

## Claims

1. Gearing-drive assembly (10), in particular for adjusting a movable part (58) in a motor vehicle, having a drive assembly (42) which, via a drive output element (40), drives a drive wheel (18) mounted on a spindle (16) of the gearing-drive assembly (10), and the drive wheel (18) is rotatably mounted in a carrier tube (14) of the gearing-drive assembly (10), which carrier tube has a receptacle (52) for a fastening device (54) for dissipating crash forces, wherein between an axial end (60) of the carrier tube (14) and the receptacle (52) there is fastened at least one retroactively, separately mountable circular or ring-shaped support element (62) for mechanical reinforcement of the carrier tube (14), wherein the support element (62) is fitted onto or into the carrier tube (14) axially until it bears axially, at least under the action of an external force, against the fastening device (54) designed as a fastening bolt (55).

2. Gearing-drive assembly (10) according to Claim 1, **characterized in that** the support element (62) is designed as an external ring (64) which bears against an outer circumferential surface (66) of the carrier tube (14).

3. Gearing-drive assembly (10) according to either of Claims 1 and 2, **characterized in that** the support element (62) is formed as an internal ring (65) or as a circular disc (68) which bears against an inner wall surface (70) of the carrier tube (14).

4. Gearing-drive assembly (10) according to one of the preceding claims, **characterized in that** the support element (62) can be connected to the carrier tube (14) by means of an - in particular self-tapping - thread (78).

5. Gearing-drive assembly (10) according to one of the preceding claims, **characterized in that** the support element (62) can be connected to the carrier tube (14) by means of welding, adhesive bonding or plastic material deformation.

6. Gearing-drive assembly (10) according to one of the preceding claims, **characterized in that** the material of the support element (62) - preferably hardened steel - has a higher strength than the material of the carrier tube (14), which is produced in particular as a metallic deep-drawn part.

7. Gearing-drive assembly (10) according to one of the preceding claims, **characterized in that** the receptacle (52) is formed as a radial passage bore in the carrier tube (14), into which passage bore can be inserted, as a fastening element (54), the fastening bolt (55), which in turn can be fixed to the body or to the part (58) to be adjusted.

8. Gearing-drive assembly (10) according to one of the preceding claims, **characterized in that** the fastening element (54, 55), after it has been mounted, bears against the support element (62) in the axial direction of the carrier tube (14).

9. Gearing-drive assembly (10) according to one of the preceding claims, **characterized in that** the drive wheel (18) is mounted radially and axially in the carrier tube (14) by means of at least one bearing shield (28) with a pot-shaped bearing receptacle (22), wherein the bearing shield (28) is produced preferably from plastic.

10. Gearing-drive assembly (10) according to one of the preceding claims, **characterized in that** the drive assembly (42) is connected to the carrier tube (14) by means of a coupling device (44), which carrier tube has a radial cutout (50) for the engagement of the drive output element (40) into the drive wheel (18).

11. Gearing-drive assembly (10) according to one of the preceding claims, **characterized in that** the support element (62) is fixedly clamped to the carrier tube (14) so as to be braced against the fastening device (54).

12. Gearing-drive assembly (10) according to one of the preceding claims, **characterized in that** the support element (62) is formed as a spring washer (81) which, over the entire circumference (82) thereof, digs with an edge (84) into the inner wall surface (70) of the carrier tube (14).

13. Gearing-drive assembly (10) according to one of the preceding claims, **characterized in that** the spring washer (81) has an outer edge region (83) which points away from the fastening device (54) in the axial direction of the carrier tube (14) - wherein the spring washer (81) is produced in particular as a bent and punched part (96).

14. Gearing-drive assembly (10) according to one of the preceding claims, **characterized in that** multiple identical support elements (62, 81) are fastened, so as to bear axially against one another, to the carrier tube (14).

15. Gearing-drive assembly (10) according to one of the preceding claims, **characterized in that**, between the at least one support element (62) and the fastening device (54), there is arranged a force-transmitting disc (88) by means of which forces (98) introduced from the fastening device (54) are transmitted to the at least one support element (62).

16. Method for producing a gearing-drive assembly (10) according to one of the preceding claims, **characterized in that** firstly the spindle (16) with the drive wheel (18) and the support element (62) are mounted as a separate structural unit (12) on the carrier tube (14), and subsequently the drive assembly (42) is fastened to the carrier tube (14) by means of the coupling device (44).

17. Method according to Claim 16, **characterized in that**, for gearing-drive assemblies (10) with different strength requirements, use is always made of a uniform standard carrier tube (14) to which, in accordance with the loading thereof, support elements (62) of different stability are fastened.

18. Method according to Claim 16, **characterized in that**, after the mounting of the fastening means on the carrier tube (14), the support element (62) or a different number of identical support elements (62) of a modular system is/are inserted into the carrier tube (14) and pressed under preload against the fastening element (54), wherein the support element (62) is autonomously secured, by engaging in a claw-like manner into the carrier tube (14), against displacement counter to the insertion direction (85).

## Revendications

1. Unité d'entraînement et de transmission (10), en particulier pour le déplacement d'une partie mobile (58) dans un véhicule automobile, comprenant un groupe motopropulseur (42) qui entraîne, par le biais d'un élément de prise de force (40), une roue motrice (18) montée sur une broche (16) de l'unité d'entraînement et de transmission (10), et la roue motrice (18) étant montée à rotation dans un tube porteur (14) de l'unité d'entraînement et de transmission (10) qui présente un logement (52) pour un dispositif de fixation (54) pour dévier les forces de collision, au moins un élément de support de forme circulaire ou annulaire (62) pouvant être monté séparément ultérieurement étant fixé entre une extrémité axiale (60) du tube porteur (14) et le logement (52), en vue de renforcer mécaniquement le tube porteur (14), l'élément de support (62) étant introduit axialement sur ou dans le tube porteur (14) jusqu'à ce que celui-ci s'applique axialement, au moins dans le cas de l'application d'une force extérieure, contre le dispositif de fixation (54) réalisé sous la forme d'un boulon de fixation (55).

2. Unité d'entraînement et de transmission (10) selon la revendication 1, **caractérisée en ce que** l'élément de support (62) est réalisé sous la forme d'une bague extérieure (64), qui s'applique contre une surface périphérique extérieure (66) du tube porteur (14).

3. Unité d'entraînement et de transmission (10) selon l'une quelconque des revendications 1 ou 2, **caractérisée en ce que** l'élément de support (62) est réalisé sous forme de bague intérieure (65) ou sous forme de disque circulaire (68), lesquels s'appliquent contre une surface de paroi interne (70) du tube porteur (14).

4. Unité d'entraînement et de transmission (10) selon l'une quelconque des revendications précédentes, **caractérisée en ce que** l'élément de support (62) peut être connecté au tube porteur (14) au moyen d'un filetage (78), notamment autotaraudeur.

5. Unité d'entraînement et de transmission (10) selon l'une quelconque des revendications précédentes, **caractérisée en ce que** l'élément de support (62) peut être connecté au tube porteur (14) par soudage, collage ou déformation plastique de matériau.

6. Unité d'entraînement et de transmission (10) selon l'une quelconque des revendications précédentes, **caractérisée en ce que** le matériau de l'élément de support (62) - de préférence de l'acier trempé - présente une plus grande tenue que le matériau du tube porteur (14), qui est notamment fabriqué en tant que pièce métallique emboutie.

7. Unité d'entraînement et de transmission (10) selon l'une quelconque des revendications précédentes, **caractérisée en ce que** le logement (52) est réalisé sous forme d'alésage de passage radial dans le tube porteur (14), dans lequel alésage peut être enfoncé le boulon de fixation (55) en tant qu'élément de fixation (54), lequel boulon de fixation peut à son tour être fixé à la carrosserie ou à la partie à déplacer (58).

8. Unité d'entraînement et de transmission (10) selon l'une quelconque des revendications précédentes, **caractérisée en ce que** l'élément de fixation (54, 55) s'applique dans la direction axiale du tube porteur (14) contre l'élément de support (62) après son montage.

9. Unité d'entraînement et de transmission (10) selon l'une quelconque des revendications précédentes, **caractérisée en ce que** la roue motrice (18) est supportée au moyen d'au moins une plaque formant palier (28) avec un logement de palier (22) en forme de pot radialement et axialement dans le tube porteur (14), la plaque formant palier (28) étant fabriquée de préférence en plastique.

10. Unité d'entraînement et de transmission (10) selon l'une quelconque des revendications précédentes, **caractérisée en ce que** le groupe motopropulseur (42) est connecté au moyen d'un dispositif d'accouplement (44) au tube porteur (14), lequel présente, pour l'engagement de l'élément de prise de force (40) dans la roue motrice (18), un évidement radial (50).

11. Unité d'entraînement et de transmission (10) selon l'une quelconque des revendications précédentes, **caractérisée en ce que** l'élément de support (62) est serré fixement au tube porteur (14) de manière serrée contre le dispositif de fixation (54).

12. Unité d'entraînement et de transmission (10) selon l'une quelconque des revendications précédentes, **caractérisée en ce que** l'élément de support (62) est réalisé sous forme de disque de serrage (81), qui s'enfonce sur toute sa périphérie (82) avec une arête (84) dans la surface de paroi intérieure (70) du tube porteur (14).

13. Unité d'entraînement et de transmission (10) selon l'une quelconque des revendications précédentes, **caractérisée en ce que** le disque de serrage (81) présente une région de bord extérieure (83) qui est tournée à l'écart du dispositif de fixation (54) dans la direction axiale du tube porteur (14), le disque de serrage (81) étant notamment fabriqué sous forme de pièce estampée-cintrée (96).

14. Unité d'entraînement et de transmission (10) selon l'une quelconque des revendications précédentes, **caractérisée en ce que** plusieurs éléments de support identiques (62, 81) sont fixés au tube porteur (14) en s'appliquant axialement les uns contre les autres.

15. Unité d'entraînement et de transmission (10) selon l'une quelconque des revendications précédentes, **caractérisée en ce qu'**entre l'au moins un élément de support (62) et le dispositif de fixation (54) est disposé un disque de transfert de force (88), qui transfère les forces (98) agissant depuis le dispositif de fixation (54) sur l'au moins un élément de support (62).

16. Procédé de fabrication d'une unité d'entraînement et de transmission (10) selon l'une quelconque des revendications précédentes, **caractérisé en ce que** la broche (16) est d'abord montée avec la roue motrice (18) et l'élément de support (62) sur le tube porteur (14) en tant qu'unité constructive séparée (12), puis le groupe motopropulseur (42) est fixé au tube porteur (14) au moyen du dispositif d'accouplement (44).

17. Procédé selon la revendication 16, **caractérisé en ce que** pour différentes exigences de solidité d'une unité d'entraînement et de transmission (10), on utilise toujours un tube porteur standard unitaire (14), sur lequel sont fixés des éléments de support (62) de stabilité différente en fonction de ses sollicitations.

18. Procédé selon la revendication 16, **caractérisé en ce qu'**après le montage des moyens de fixation sur le tube porteur (14), l'élément de support (62) ou un nombre différent d'éléments de support identiques (62) d'un système modulaire sont enfoncés dans le tube porteur (14) et sont pressés avec précontrainte contre l'élément de fixation (54), l'élément de support (62) étant fixé de manière autonome au moyen de griffes de fixation dans le tube porteur (14) pour empêcher un déplacement dans le sens inverse à la direction d'enfoncement (85).
